# EUROPEAN PATENT APPLICATION

(11) **EP 1 814 357 A1**
(43) Date of publication of application: **01.08.2007**
(21) Application number: 05783672.8
(22) Date of filing: 14.09.2005
(51) Int. Cl.: H04S 1/00

(54) **SOUND PRODUCING METHOD, SOUND SOURCE CIRCUIT, ELECTRONIC CIRCUIT USING SAME, AND ELECTRONIC DEVICE**

(30) Priority: 21.10.2004 JP 2004307352
(71) Applicant: Rohm, Co., Ltd., Kyoto-shi, Kyoto 615-0045 (JP)
(72) Inventor: YANO, Shigehide, Kyoto-shi, Kyoto 615-8585 (JP); TANAKA, Yoshihisa, Kyoto-shi, Kyoto 615-8585 (JP)
(74) Representative: Herbjörnsen, Rut
(86) International application number: PCT/JP2005/016906
(87) International publication number: WO 2006/043380

(57) **Abstract**

A situation in which effect processing such as position adjustment of a virtual sound source located in a sound field does not synchronously match the timing of reproducing a sound is suppressed. With a sound source circuit (100), a FIFO memory (20) stores the information that indicates a change in a virtual sound source located in a reproduced sound field and audio data. A control unit (30) operates in cooperation with a 3D positioning unit (210) which performs position adjustment processing for the audio data stored in the FIFO memory (20) so as to adjust the position of the virtual sound source located in the reproduced sound field. With such an arrangement, a sound is reproduced according to the audio data subjected to the position adjustment. Upon detection of the aforementioned information, the control unit (30) notifies the 3D positioning unit (210) of the detection. At this time, an interruption signal that corresponds to the information may be transmitted to the 3D positioning unit (210) via a dedicated signal line.

## Description

### Technical Field

The present invention relates to a sound reproducing method and a sound source circuit for reproducing sound according to audio data subjected to effect processing, and an electronic circuit and an electronic device employing such a sound source circuit.

### Background Art

There is an increased demand for sound quality due to improvement of functions of cellular phones. Accordingly, portable terminals such as cellular phones are sometimes provided with stereo speakers. However, stereo speakers included in a small casing such as portable terminals have difficulty in reproducing high-quality stereo sound.

On the other hand, as an audio signal processing technique for reproducing a three-dimensional sound field using the user's left and right ears, Patent document 1 discloses a synthesizing technique for reproducing a sound field using a pair of speakers and only two signal channels. Such a sound field provides sound effects to the user as if a sound source was located at a predetermined position in a sphere defined with the user's head as the center of the sphere.

Also, Patent document 1 discloses that such sound processing is effectively performed for sounds of which examples include: a sound emitted from a spatial position close to the user's head; a sound moving toward or away from the user over time; a human voice whispered close to the user's ear; etc.
[Patent Document 1]
PCT Japanese Translation Patent Publication No. 2001-511995

### Disclosure of Invention

### [Problems to be Solved by the Invention]

Some portable terminals such as cellular phones mount a sound source circuit that comprises a sound source LSI (Large Scale Integration) for producing a melody which is a notification of a call. Let us consider an arrangement in which such a sound source circuit handles MIDI (trademark) data (Musical Interments Digital Interface). With such an arrangement, the timing of reproducing a sound is determined by a time management command defined in this data. Accordingly, it is difficult for software such as a sequencer executed on the sound source circuit to estimate the time lag from a point in time when the data has been written to memory in the sound source circuit up to a point in time when the sound is reproduced. Let us consider an arrangement employing a combination of such a sound source circuit and an engine for adjusting the position of a virtual sound source in a sound field. In some cases, such an arrangement leads to a situation in which the point in time when the sound is reproduced by the aforementioned sound source circuit does not synchronously match the position of a virtual sound source adjusted by the aforementioned engine. This leads to a problem of a virtual sound image being provided at an undesired position.

The present invention has been made in view of such a situation. Accordingly, it is a general purpose of the present invention to provide a sound reproducing method and a sound source circuit having a function of suppressing a problem in which the point in time when the sound is reproduced does not synchronously match effect processing such as adjustment of the position of a virtual sound source in a sound field, and an electronic circuit and electronic device employing such a sound source circuit.

### [Means for Solving the Problems]

A sound reproducing method is provided. In one embodiment of the present invention, the sound reproducing method comprises: analyzing a timing of reproducing a sound according to audio data; adding information that indicates the sound reproducing timing to the audio data; and performing effect processing for the audio data, according to which a sound is to be reproduced, according to the sound reproducing timing acquired with reference to the information.

With such an embodiment, effect processing is performed with reference to the information that indicates the sound reproducing timing. This suppresses a situation in which the effect processing does not synchronously match the sound reproduction.

Another sound reproducing method is provided. In one embodiment of the present invention, The sound reproducing method comprises: analyzing a change in a virtual sound source located in a sound field reproduced according to audio data; adding the information that indicates the change in the virtual sound source to the audio data; and adjusting the position of the virtual sound source located in the sound field reproduced according to the audio data, according to which a sound is to be reproduced, according to the change in the virtual sound source acquired with reference to the information. The "change in a virtual sound source" may include the switching of the virtual sound source, or the change due to movement of the virtual sound source.

Such an arrangement adjusts the position of a virtual sound source located in a reproduced sound field with reference to the information that indicates the change in the virtual sound source. This suppresses a situation in which the position adjustment does not synchronously match the sound reproduction.

A sound source circuit is provided. In one embodiment of the present invention, the sound source circuit comprises: a storage unit which stores information that indicates a sound reproducing timing and audio data; and a control unit which reproduces a sound according to the processed audio data in cooperation with an effect processing unit which performs effect processing for the audio data stored in that storage unit. With such an aspect, upon detection of the information, that control unit notifies that effect processing unit that the information has been detected.

With such an embodiment, the effect processing unit is notified of the information that indicates the sound reproducing timing. This suppresses a situation in which the position adjustment does not synchronously match the sound reproduction.

Another sound source circuit is provided. In one embodiment of the present invention, the sound source circuit comprises: a storage unit which stores information that indicates a change in a virtual sound source located in a reproduced sound field and audio data; and a control unit which reproduces a sound according to the audio data subjected to position adjustment in cooperation with a position adjustment unit which performs position adjustment processing for the audio data stored in that storage unit so as to adjust the position of the virtual sound source located in the reproduced sound field. With such an arrangement, upon detection of the information, that control unit notifies that position adjustment unit that the information has been detected.

With such an embodiment, the position adjustment unit is notified of the information that indicates a change in a virtual sound source located in a reproduced sound field. This suppresses a situation in which the position adjustment does not synchronously match the sound reproduction.

Also, the control unit may transmit an interrupt signal that corresponds to the information to that position adjustment unit via a dedicated signal line. Such an arrangement suppresses a situation in which the position adjustment does not synchronously match the sound reproduction without affecting the exchange of audio data between the control unit and the position adjustment unit.

Also, an arrangement may be made in which, in a case of setting multiple virtual sound sources in the reproduced sound field, upon detection of at least one information set that indicates a change in any one of the virtual sound sources, an interrupt signal that corresponds to the information is transmitted to that position adjustment unit via a dedicated signal line assigned to the corresponding virtual sound source. Let us consider a case in which multiple virtual sound sources are located in a sound field, which change independently of one another. Even in such a case, such an arrangement suppresses erroneous operation due to frequent interrupt signals.

Also, the control unit may embed the information at vacant portion in the audio data which is to be transmitted to that position adjustment unit. Such an arrangement suppresses a situation in which the position adjustment does not synchronously match the sound reproduction without involving any dedicated signal line.

An electronic circuit is provided. In one embodiment of the present invention, the electronic circuit comprises: the aforementioned sound source circuit; and an effect processing unit which performs effect processing for the audio data. Such an arrangement provides an electronic circuit having a function of suppressing a situation in which the effect processing does not synchronously match the sound reproduction.

Another electronic circuit is provided. In one embodiment of the present invention, the electronic circuit comprises: the aforementioned sound source circuit; and a position adjustment unit which performs position adjust processing for the audio data so as to adjust the position of the virtual sound source located in the sound field reproduced according to the audio data. Such an arrangement provides an electronic circuit having a function of suppressing a situation in which the position adjustment processing for a virtual sound source located in a reproduced sound field does not synchronously match the sound reproduction.

An electronic device is provided. In one embodiment of the present invention, the electronic device comprises: speakers; and the aforementioned electronic circuit for reproducing a sound via that speakers. Such an arrangement provides an electronic device having a function of suppressing a situation in which the effect processing does not synchronously match the sound reproduction.

Note that any combination of the aforementioned components or any manifestation of the present invention realized by replacement of a device, a method, a system, a computer program, a recording medium that stores the computer program, and so forth, is effective as an embodiment of the present invention.

### [Advantages]

The present invention suppresses a situation in which effect processing does not synchronously match the sound reproduction.

### Brief Description of the Drawings

FIG. 1 is a diagram which shows a schematic configuration of a sound source circuit according to an embodiment 1.
FIG. 2 is a diagram which shows a control timing with respect to the sound source circuit. FIG. 2(a) shows a control timing according to a conventional technique, and FIG. 2(b) shows a control timing according to the embodiment 1.
FIG. 3 is a diagram which shows a configuration of an electronic device mounting an electronic circuit including a sound source LSI and a 3D positioning unit according to the embodiment 1.
FIG. 4 is a diagram for describing virtual stereo processing. FIG. 4(a) shows a state in which a sound is reproduced without virtual stereo processing, which is a conventional technique. FIG. 4(b) shows a state in which a sound is reproduced using virtual stereo processing according to the embodiment 1.
FIG. 5 is a flowchart which shows a processing procedure for the sound source circuit and the 3D positioning unit according to the embodiment 1.
FIG. 6 is a diagram which shows an example of waveform transition of each signal.
FIG. 7 is a diagram which shows a schematic configuration of a sound source circuit according to an embodiment 2.
FIG. 8 is a diagram which shows a configuration of an electronic device mounting an electronic circuit including a sound source LSI and a 3D positioning unit according to the embodiment 2.
FIG. 9 is a diagram which shows an example of waveform transition of each signal shown in FIG. 8.
FIG. 10 is a timing chart which shows an example of signals which are transmitted from a control unit to the 3D positioning unit via an audio I/F.
FIG. 11 is a diagram which shows an example of waveform transition of each signal according to an embodiment 3.

### Reference Numerals

- 10: CPU I/F
- 20: FIFO memory
- 30: control unit
- 32: virtual stereo unit
- 34: sound source sequencer
- 40: audio I/F
- 52, 54: DAC
- 62, 64: speaker
- 100: sound source circuit
- 110: sound source LSI
- 200: application processor
- 210: 3D positioning unit
- 300: electronic circuit
- 400: electronic device

### Best Mode for Carrying Out the Invention

### (Embodiment 1)

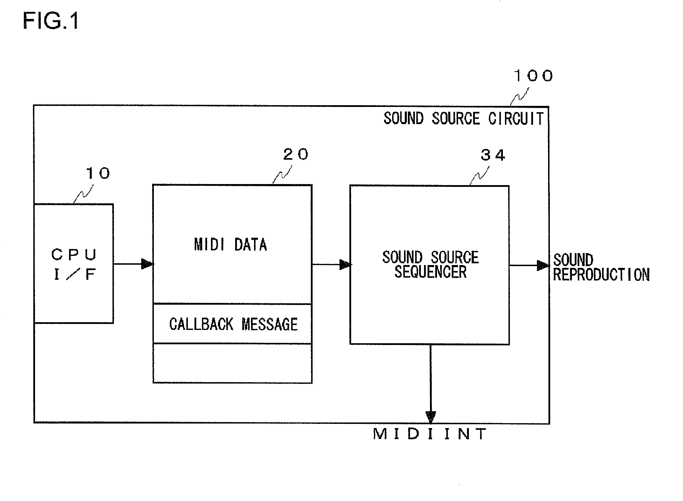

FIG. 1 is a diagram which shows a schematic configuration of a sound source circuit 100 according to an embodiment 1. The embodiment 1 offers a technique that provides synchronicity between the point in time when a sound is reproduced by the sound source circuit 100 that comprises a sound source LSI 110 etc., and the position adjustment timing provided by an engine (which will be referred to as "3D positioning unit" hereafter) for adjusting the position of a virtual sound source in a three-dimensional sound field from the perspective of the user's sensation. A 3D positioning unit 210 performs effect processing for each audio data so as to provide special effects to each audio data. Examples of such special effects include: a special effect that provides a sound of an airplane as if it came from a position above the user's head; a special effect that provides a sound of a vehicle as if it came from a position around the ground.

First, schematic description will be made regarding an embodiment 1. A CPU such as an application processor provided externally to the sound source circuit 100 writes audio data to a FIFO (First-In First-Out) memory 20 included in the sound source circuit 100 via a CPU interface (which will be referred to as "CPU I/F" hereafter). The aforementioned audio data may be described in a MIDI format, ADPCM (Adaptive Differential Pulse Code Modulation) format, or the like. FIG. 1 shows an example in which MIDI data is written to the FIFO memory 20. The MIDI data is recorded as the tune information in the form of a combination of tone, duration, volume, special effects, etc.

The aforementioned CPU analyzes a command with respect to the time management included in the audio data, thereby determining the timing for switching the position of a virtual sound source from the perspective of user's sensation, which is located in the three-dimensional space in a sound field created at the time of reproducing the audio data. Subsequently, the CPU inserts a Callback message, which is data for indicating the switching timing, at a predetermined position in the audio data such as a portion at which the virtual sound source is to be switched from the perspective of the user's sensation. Then, the audio data is written to the FIFO memory 20.

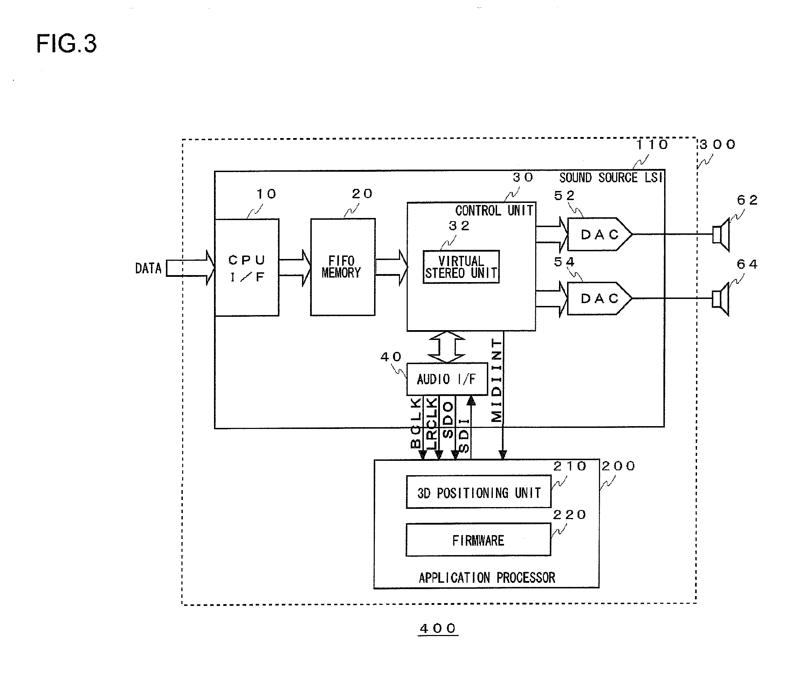

The FIFO memory 20 is memory that outputs the input data in order of input. The sound source sequencer 34 is provided in a form of software, which provides functions of processing, reproduction, etc., for MIDI data. The sound source sequencer 34 may be executed by the aforementioned CPU. The sound source sequencer 34 reproduces the MIDI data output from the FIFO memory 20, and instructs unshown speakers to reproduce a sound. Furthermore, upon detection of a Callback message at the time of processing data stored within the FIFO memory 20, the sound source sequencer 34 generates an interrupt signal MIDIINT. The interrupt signal MIDIINT is output to an application processor 200 shown in FIG. 3. The interrupt signal MIDI, used in such a way, offers the synchronicity between the sound reproducing timing provided by the sound source sequencer 34 and the 3D positioning processing provided by the 3D positioning unit 210.

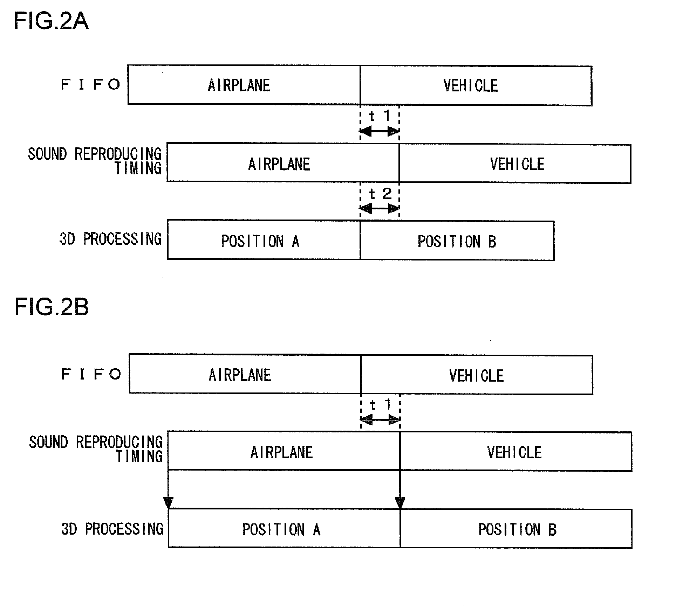

FIG. 2 is a diagram which shows control timing with respect to the sound source circuit 100. In FIG. 2, first, audio data for reproducing an airplane sound and audio data for reproducing a vehicle sound are written to the FIFO memory 20.

FIG. 2(a) is an arrangement which does not involve the technique according to the embodiment 1. The sound source sequencer 34 reproduces sound according to the audio data output from the FIFO memory 20 in order of output. With such an arrangement employing MIDI data, the time lag from the point in time when the audio data has been written to the FIFO memory up to the point in time when sound is reproduced according to the audio data changes according to the amount defined by the management command such as Tempo or the like, described in the MIDI data. Also, this time lag changes according to a tune, and so forth. With such an arrangement shown in FIG. 2, the sound source sequencer 34 cannot estimate the time lag t1 from the point in time when the audio data for reproducing the vehicle sound has been stored in the FIFO memory 20 up to the point in time when the sound is reproduced according to the audio data. Accordingly, the sound source sequencer 34 cannot estimate the timing at which the airplane sound is switched to the vehicle sound.

In FIG. 2, the position A indicates the state in which a virtual sound is located at a position that corresponds to the airplane sound, e.g., the state in which the virtual sound is located at an upper position in a sound field created with the user as the center. On the other hand, the position B indicates the state in which a virtual sound is located at a position that corresponds to the vehicle sound, e.g., the state in which the virtual sound is located at a lower position in a sound field created with the user as the center. Let us consider an arrangement as shown in FIG. 2(a) in which the switching timing for switching the state of the position A to the state of the position B is adjusted to the switching timing for switching the audio data that reproduces the airplane sound to the audio data that reproduces the vehicle sound, which are stored in the FIFO memory 20. Such an arrangement leads to a time lag t2 from the switching timing at which the state of the position A to the state of the position B up to the switching timing at which the sound reproduced by the sound source sequencer 34 is switched. Specifically, during the lag time t2, the airplane sound is reproduced as if it came from a position of a vehicle moving on the ground. With such an arrangement, the position of the virtual sound source does not synchronously match an image of the user from the perspective of the user's sensation.

On the other hand, FIG. 2(b) shows an arrangement employing a technique according to the embodiment 1. Upon detection of a Callback message which provides the synchronicity with the timing of reproducing a sound according to the MIDI data, the sound source sequencer 34 instructs the application processor 200, which executes the 3D positioning processing, to generate an interrupt signal MIDIINT. The interrupt signal MIDIINT allows the 3D positioning unit 210 to operate synchronously with the timing of the sound reproduced by the sound source sequencer 34. Accordingly, with such an arrangement shown in FIG. 2(b), the 3D positioning unit 210 can switch the mode of the position A to the mode of the position B synchronously with the timing of the sound source sequencer 34 switching a mode in which the airplane sound is reproduced to a mode in which the vehicle sound is reproduced.

Description will be made below regarding the embodiment 1 in detail. FIG. 3 is a diagram which shows a configuration of an electronic device 400 that mounts an electronic circuit 300 including the sound source LSI 110 and the application processor 200. The sound source LSI 110 is provided in the form of a one-chip integrated circuit that offers the same functions as those of the aforementioned sound source circuit 100. The application processor 200 provided externally to the sound source LSI 110 writes audio data to the FIFO memory 20 included within the sound source LSI 110 via the CPU I/F 10. The application processor 200 includes the 3D positioning unit 210 and firmware 220.

The 3D positioning unit 210 analyzes a command included in the audio data with respect to the time management, and determines the timing at which the position of a virtual sound source, which is provided according to the audio data from the perspective of the user's sensation, is to be switched in the three-dimensional space at the time of reproducing the audio data. Furthermore, the 3D positioning unit 210 inserts a Callback message, which is data for indicating the switching timing for switching the virtual sound source, at a predetermined position in the audio data such as a portion at which the audio data component for reproducing an airplane sound is switched to the audio data component for reproducing a vehicle sound. Then, the audio data is written to the FIFO memory 20.

The control unit 30 performs various kinds of effect processing for the audio data read out from the FIFO memory 20. Also, the control unit 30 reproduces a sound according to the audio data thus read out. The control unit 30 performs sequence processing for the audio data, and transmits the audio data to the application processor 200 via an audio interface (which will be referred to as "audio I/F" hereafter) 40 in the form of digital data.

The 3D positioning unit 210 is a block provided by a combination of the aforementioned application processor 200 and the firmware 220 for 3D positioning. The control unit 30 or the 3D positioning unit 210 may be provided in the form of a single chip. The 3D positioning unit 210 performs three-dimensional positioning processing for the audio data received from the control unit 30 via the audio I/F 40, and returns the audio data to the control unit 30.

In FIG. 3, four kinds of signals, i.e., the signal BCLK, the signal LRCLK, the signal SDO, and the signal SID are exchanged between the application processor 200 and the audio I/F 40. The signal BCLK is a clock signal for operating the application processor 200 while maintaining the synchronicity in increments of bits. The signal LRCLK is a signal which provides the data reception timing for each data reception, and which has a function of indicating whether the data is used for the left channel or the right channel. The signal SDO is a signal that instructs the control unit 30 to serially output audio data to the application processor 200. Conversely, the signal SDI is a signal that instructs the application processor 200 to serially output audio data to the control unit 30. The signals exchanged in forms of the signal BCLK, the signal LRCLK, the signal SDO, and the signal SDI may be provided according to a standard such as I2S (I squired S) standard.

The control unit 30 includes a virtual stereo unit 32. The virtual stereo unit 32 adds a phase component, which is inverted to the signal of the left channel, to the signal of the right channel, for example. Furthermore, the virtual stereo unit 32 performs similar processing for the signal of the left channel. Such an arrangement provides a rich sound field from the perspective of the user's sensation. With such an arrangement, when the sound output from the right speaker is cancelled out by the sound output from the left speaker, the user detects the sound output from the right speaker mainly by the right ear. The same can be said of a case in which the sound output from the left speaker is cancelled out by the sound output from the right speaker. Such an arrangement enables the sound to be separated into the sound of the right channel and the sound of the left channel, thereby enriching the sound field.

The virtual stereo unit 32 performs the aforementioned virtual stereo processing for the audio data subjected to the 3D positioning processing by the 3D positioning unit 210. Let us consider an arrangement including a pair of speakers 62 and 64, and an unshown headphone, as a user interface. With such an arrangement, the virtual stereo unit 32 performs the aforementioned processing for the audio data to be provided to the speakers 62 and 64 and the audio data to be provided to the headphone.

On the other hand, upon the control unit 30 detecting the aforementioned Callback message in the data read out from the FIFO memory 20, an interrupt signal MIDINT is output to the application processor 200. In FIG. 3, the control unit 30 outputs the interrupt signal MIDINT to the application processor 200. The interrupt signal MIDINT is a control signal transmitted to the application processor 200, which indicates the switching timing at which the position of the virtual sound source is switched, from the perspective of the user's sensation.

Two digital/analog converters (each of which will be referred to as "DAC" hereafter) 52 and 54 convert audio digital signals of the left and right channels, which have been output from the control unit 30, into respective analog signals. The analog signals thus converted are output to the speakers 62 and 64. Let us consider an arrangement in which an unshown headphone or the like is connected to a device such as a portable terminal or the like. With such an arrangement, the analog signals are also output to the headphone. The pair of the speakers 62 and 64 output audio signals of the left and right channels.

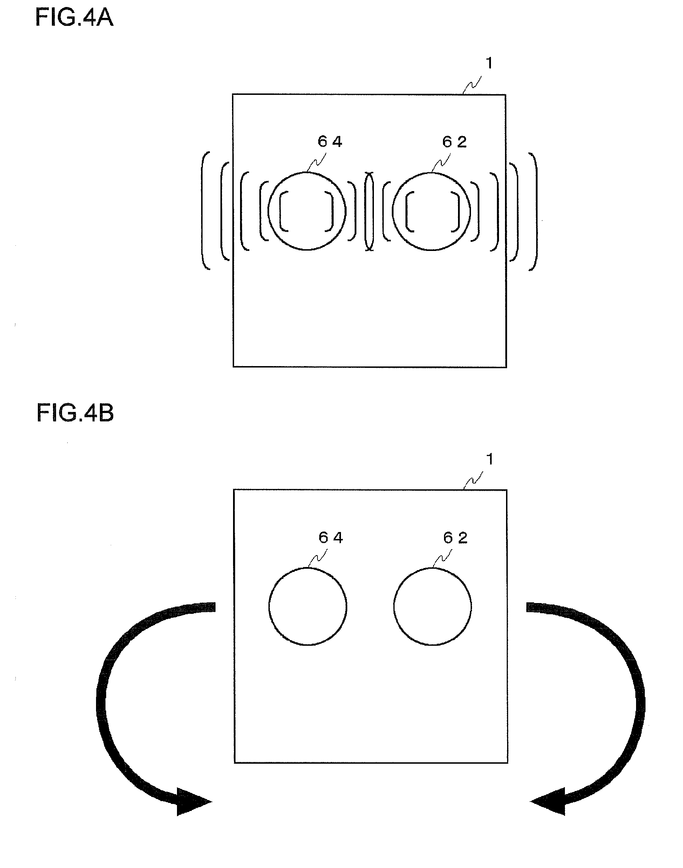

FIG. 4 is a diagram for describing virtual stereo processing. FIG. 4(a) shows an arrangement which does not involve a technique according to the embodiment 1. Let us consider a portable electronic device such as a cellular phone, portable game machine, etc. With such an electronic device, there is a difficulty in disposing the pair of the speakers 62 and 64 with a sufficient distance therebetween due to the restriction of the casing size of the electronic device. Accordingly, the sounds emitted from the left and right speakers 62 and 64 are mixed with each other, as shown in FIG. 4(a). Although the pair of the speakers 62 and 64 are provided, such an arrangement gives the user a sensation as if the sounds were emitted from the same position, leading to difficulty in providing stereo sensation.

On the other hand, FIG. 4(b) shows an arrangement employing a technique according to the embodiment 1. With such an arrangement, the virtual stereo processing is performed for the left and right channels, thereby providing the stereo sensation as if the pair of the speakers 62 and 64 were disposed with a sufficient distance.

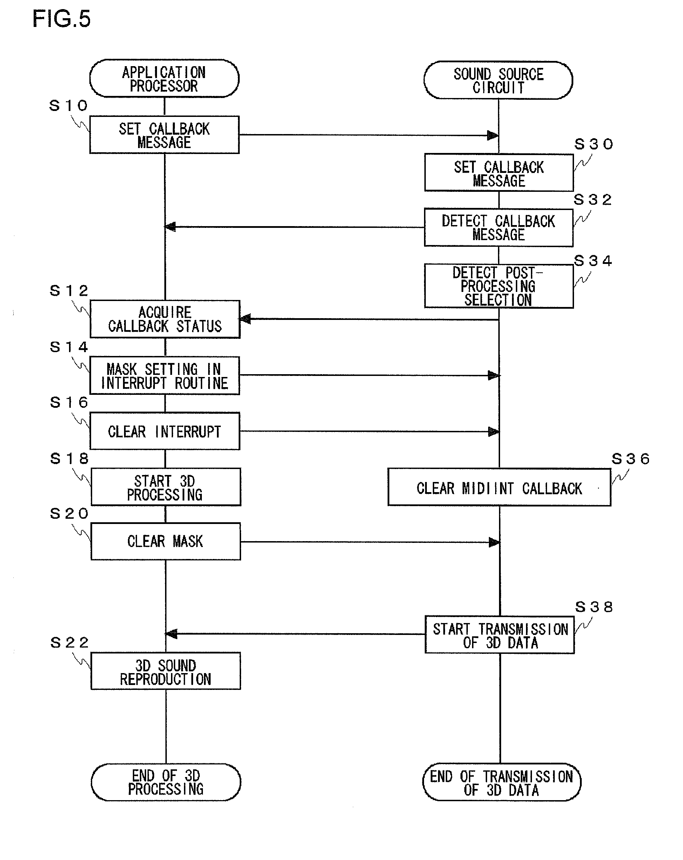

FIG. 5 is a flowchart which shows a processing procedure for the sound source circuit 100 and the application processor 200 according to the embodiment 1. Description will be made regarding an arrangement in which the sound source circuit 100 shown in FIG. 1 operates in cooperation with the application processor 200 shown in FIG. 3. The flow shown on the left side of the flowchart shows the operation timing of the application processor 200. On the other hand, the flow shown on the right side shows the operation timing of the sound source circuit 100 which is provided as a hardware resource.

First, the application processor 200 sets a Callback message in MIDI data (S10). Furthermore, after the setting of the Callback message, a post-processing selection value is set in the form of a post-processing selection message. The term "post-processing selection value" as used here represents a value which indicates how the MIDI data is output from the sound source circuit 100.

With such an arrangement which makes such settings, the Callback message and the post-processing detection value are consecutively set in the FIFO memory 20 included in the sound source circuit 100 (S30). Subsequently, the sound source sequencer 34 reads out the data stored in the FIFO memory 20, and detects the Callback message (S32). Upon detection of the Callback message, the sound source sequencer 34 sets an interrupt signal MIDINT, which is output to the application processor 200, to the low level.

After detection of the Callback message, the sound source sequencer 34 detects the post-processing selection message (S34). The post-processing selection message is an instruction to output the MIDI data, which is to be targeted for 3D positioning processing, to the application processor 200 via a serial I/F that connects between the sound source sequencer 34 and the application processor 200.

Upon detection of the Callback message from the interrupt signal MIDIINT, which indicates the timing of the 3D positioning processing, the application processor 200 acquires a Callback status (S12). Upon the interrupt signal MIDINT being set to the low level, the 3D positioning unit 210 executes an interrupt routine. In the interrupt routine, mask settings are made so as to prevent the MIDI data from being output from the sound source circuit 100 to the application processor 200 (S14). Then, the 3D positioning unit 210 makes settings so as to clear the interrupt received from the sound source circuit 100 (S16). Subsequently, the 3D positioning unit 210 starts the 3D positioning processing (S18).

The sound source sequencer 34 clears the Callback message that corresponds to the interrupt signal MIDIINT according to the interrupt clear settings made by the application processor 200 (S36). The 3D positioning unit 210 clears the mask set in the aforementioned interrupt routine (S20). Upon clearing the mask, the sound source sequencer 34 can transmit the MIDI data to the application processor 200 via the serial I/F. Accordingly, in this stage, the sound source sequencer 34 starts to transmit the MIDI data (S38). With such an arrangement, the time lag from the detection of the post-processing selection message in the previous step up to the transmission of the MIDI data in this step can be set to around 4 msec.

The 3D positioning unit 210 performs the 3D positioning processing for the MIDI data transmitted via the serial I/F (S22). In this stage, the sound source sequencer 34 can reproduce a sound according to the MIDI data thus subjected to the effect processing.

Description has been made regarding a procedure in which a Callback message that indicates the timing of reproducing a sound is loaded in the FIFO memory 20, and an interrupt signal is generated and is transmitted to the application processor 200. However, the present invention is not restricted to such an arrangement employing MIDI data. Also, such a procedure may be applied to an arrangement employing ADPCM data or the like.

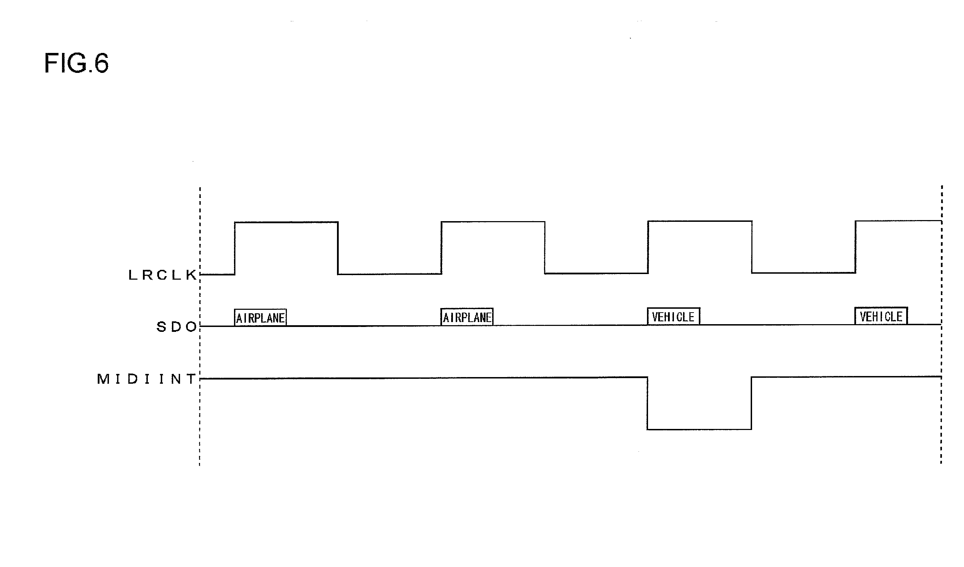

FIG. 6 is a diagram which shows an example of waveform transition of the signal LRCLK, the signal SDO, and the interrupt signal MIDIINT shown in FIG. 3. In this example, the sound is switched from an airplane sound to a vehicle sound at a certain point in time as shown in FIG. 2. The signal LRCLK is provided in a cyclic and repetitive waveform. With such an arrangement, data is exchanged in increments of unit cycles of the repetitive waveform. The signal SDO represents the audio data input to the application processor 200. FIG. 6 shows an example in which the audio data for reproducing an airplane is input twice, following which the audio data for reproducing a vehicle is input twice. The interrupt signal MIDIINT is an interrupt signal transmitted to the application processor 200. As shown in FIG. 6, using the falling edge from the high level to the low level of the interrupt signal MIDIINT, such an arrangement notifies the 3D positioning unit 210 of the timing of switching the position of a sound image of the airplane to the position of a sound image of the vehicle, which are to be located in the 3D positioning processing.

With the embodiment 1 as described above, a Callback message is used as a synchronizing signal for providing the operation synchronously with the 3D positioning unit. Such an arrangement suppresses a situation in which the timing of producing a sound does not synchronously match the 3D positioning processing at the time that the sound source sequencer reproduces a sound, thereby avoiding a situation in which a sound image is located at an undesired position.

### (Embodiment 2)

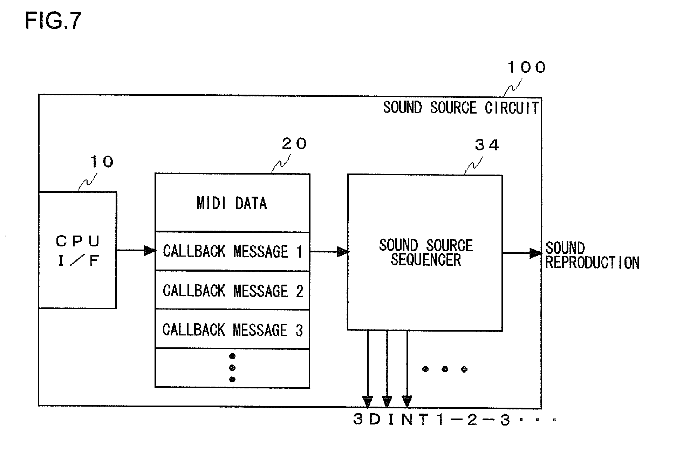

FIG. 7 is a diagram which shows a schematic configuration of the sound source circuit 100 according to an embodiment 2. The embodiment 2 offers a technique for providing the synchronicity between the timing of the sound source circuit 100 for producing a sound and the position adjustment timing provided by the 3D positioning unit 210 for adjusting the positions of multiple virtual sound sources in the three-dimensional sound field from the perspective of the user's sensation. The 3D positioning unit 210 performs effect processing for audio data for creating multiple virtual sound sources, which gives the user a sensation as if separate sounds came from the multiple virtual sound sources located at predetermined positions in the sound field although the sounds emitted from the multiple virtual sound sources are mixed together.

The sound source circuit 100 according to the embodiment 2 has basically the same configuration as that according to the embodiment 1. Description will be made below regarding the difference therebetween. A CPU provided externally to the sound source circuit 100 writes audio data to the FIFO memory 20 included in the sound source circuit 100 via a CPU I/F 10. The aforementioned CPU analyzes a command with respect to the time management included in the audio data, and determines the switching timing of switching the position of each of multiple virtual sound sources located in the three-dimensional space of the sound field reproduced according to the audio data from the perspective of the user's sensation. Then, the aforementioned CPU inserts each Callback message BOX such as a Callback message 1, a Callback message 2, etc., at the switching portions in the audio data, each of which indicates the switching timing of switching the corresponding virtual sound source in the three-dimensional space from the perspective of the user's sensation. Then, the audio data is written to the FIFO memory 20.

At the time of performing processing for the data stored in the FIFO memory 20, upon detection of any one of the Callback messages, the sound source circuit 34 generates an interrupt signal 3DINT that corresponds to the Callback message thus detected. Here, the Callback message 1 corresponds to an interrupt signal 3DINT1. The Callback message 2 corresponds to an interrupt signal 3DINIT2. With the embodiment 2, a dedicated 3DINT line is provided for each Callback message between the sound source circuit 100 and the application processor 200 for executing the 3D positioning processing. With such an arrangement, the sound source sequencer 34 transmits the interrupt signal 3DININT1 or the interrupt signal 3DNINT2 to the application processor 200 via the 3DINT line that corresponds to the Callback message thus detected.

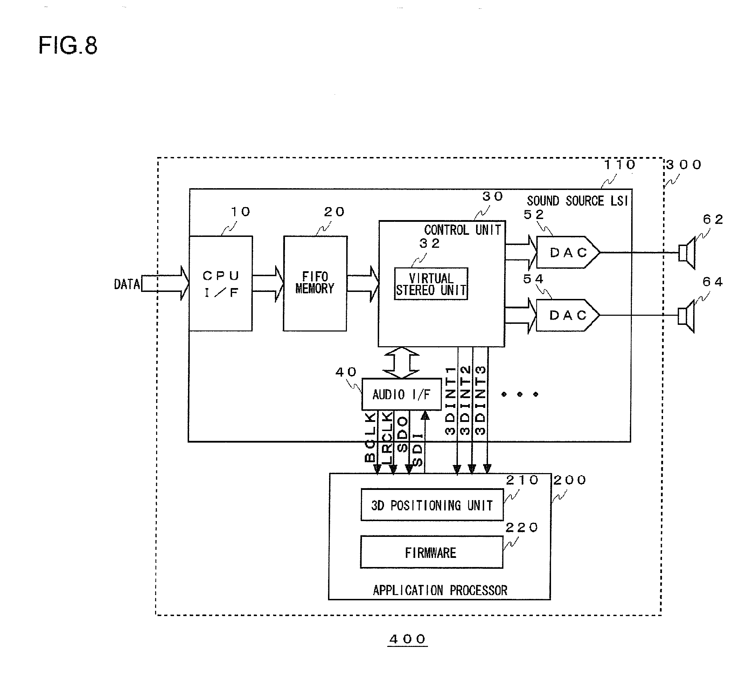

Detailed description will be made below regarding the embodiment 2. FIG. 8 is a diagram which shows a configuration of the electronic device 400 mounting the electronic circuit 300 including the sound source LSI 110 and the application processor 200 according to the embodiment 2. The sound source LSI 110 and the application processor 200 according to the embodiment 2 have basically the same configurations as those shown in FIG. 3 described in the embodiment 1. Description will be made below regarding the difference therebetween.

The 3D positioning unit 210 analyzes a command with respect to time management included in the audio data, and determines the switching timing for switching the position of each of multiple virtual sound sources in the three-dimensional space of the sound field reproduced according to the audio data. Then, in order to indicate the timing for switching the position of each of these virtual sound sources in the three-dimensional space, the 3D positioning unit 210 inserts data, i.e., a Callback message, at the corresponding position in the audio data, which indicates the switching timing for switching the position of each of the virtual sound sources located in the three-dimensional space. Subsequently, the 3D positioning unit 210 writes the audio data to the FIFO memory 20.

The control unit 30 is connected to the application processor 200 via multiple interrupt signal lines. While FIG. 8 shows an arrangement including three interrupt signal lines, the present invention is not restricted to such an arrangement. Upon detection of any one of the Callback messages read out from the FIFO memory 20, the control unit 30 outputs the interrupt signal 3DINT1, the interrupt signal 3DINT2, or the interrupt signal 3DINIT3, to the application processor 200 via the corresponding interrupt signal line.

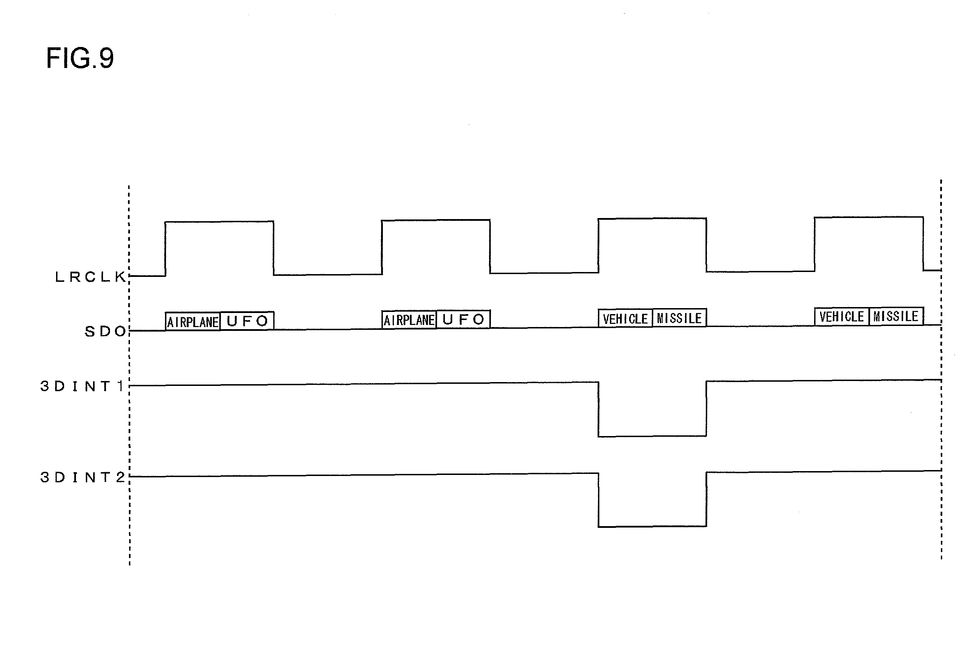

FIG. 9 is a diagram which shows an example of waveform transition of the signal LRCLK, the signal SDO, the signal 3DINT1, and the signal 3DINT2 shown in FIG. 8. In this example, the sound is switched from the state in which a sound of an airplane and a sound of a UFO are mixed, to the state in which a sound of a vehicle and a sound of a missile are mixed, at a certain point in time. The same can be said of the signal LRCLK and the signal SDO as those described above with reference to FIG. 6. In FIG. 9, the audio data for reproducing the state in which the sound of the airplane and the sound of the UFO are mixed is input twice, following which the audio data for reproducing the state in which the sound of the vehicle and the sound of the missile are mixed is input twice. The interrupt signal 3DINT1 and the interrupt signal 3DINT2 are interrupt signals which are transmitted to the application processor 200.

In FIG. 9, using the falling edge from the high level to the low level of the interrupt signal 3DINT1, such an arrangement notifies the 3D positioning unit 210 of the timing of switching the position of a sound image of the airplane to the position of a sound image of the vehicle, which are to be located in the 3D positioning processing. In the same way, using the falling edge from the high level to the low level of the interrupt signal 3DINT2, such an arrangement notifies the 3D positioning unit 210 of the timing of switching the position of a sound image of the UFO to the position of a sound image of the missile, which are to be located in the 3D positioning processing.

With the embodiment 2 as described above, multiple Callback messages are prepared, and the application processor 200 includes a dedicated signal line for transmitting an interruption signal for each of the multiple Callback messages. Such an arrangement enables the application processor 200 to locate multiple virtual sound sources at the multiple positions in the sound field while suppressing frequent interrupt signals via a particular signal line. That is to say, with such an arrangement, multiple Callback messages are provided, and multiple signal lines are provided corresponding to the multiple Callback messages. Such an arrangement enables the application processor 200 to store the information received in parallel while preventing the received data from dropping out, thereby ensuring that the 3D positioning unit 210 performs the corresponding processing.

### (Embodiment 3)

An embodiment 3 offers a technique that provides the synchronicity between the sound source circuit 100 and the application processor 200 by embedding the timing information in a vacant channel in the audio data without involving any dedicated signal line for transmitting the Callback message from the sound source circuit 100 to the application processor 200, unlike the embodiment 1 and the embodiment 2. The sound source circuit 100 and the application processor 200 according to the embodiment 3 have basically the same configurations as those described in the embodiment 1 with reference to FIG. 3. Description will be made below regarding the difference. In brief, the difference therebetween is that the present embodiment include no interrupt signal line that connects the control unit 30 and the application processor 200.

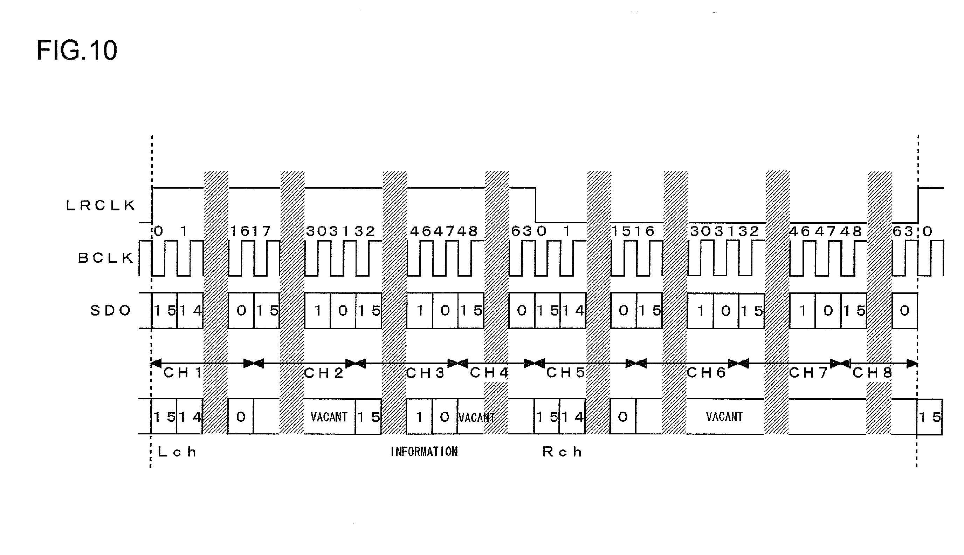

FIG. 10 is a timing chart which shows an example of signals transmitted from the control unit 30 to the application processor 200 via the audio I/F 40. The control unit 30 serially transmits the audio data in the form of the signal SDO in the I2S format. In FIG. 10, the signal LRCLk indicates the data reception timing for each. Specifically, the data is transmitted once for each cycle. With such an arrangement, 64-bit data or 128-bit data can be transmitted for each transmission. The signal BCLK indicates the transmission timing for each unit bit. Note that the hatched region indicates the data stream which is unshown.

With an arrangement shown in FIG. 10, a total of 128 bits of data, which consists of a 64-bit data set for the left channel Lch and another 64-bit data set for the right channel Rch, is transmitted for each cycle of the signal LRCLK. Furthermore, eight channels, each of which is assigned to 16-bit data, are provided in a data set for each cycle of the signal LRCLK. Such an arrangement enables the signal SDO to transmit eight kinds of 16-bit data for each transmission. The data stream drawn below the signal SDO indicates the data stream transmitted in practice. FIG. 10 shows an example in which the audio data is written at the first channel CH1 and the fifth channel CH5. That is to say, FIG. 10 shows an example in which a single virtual sound source is located in the sound field. In a case of locating multiple virtual sound sources in the sound field, other channels CH are used.

With an arrangement employing the DACs 52 and 54 for 16-bit data, it is sufficient for such an arrangement to transmit a total of 32 bits of data, which consists of the left and right channel data sets, for each cycle of the signal LRCLK. Accordingly, there are vacant channels as shown in FIG. 10. With an example shown in FIG. 10, the information for providing the synchronicity between the timing for reproducing a sound according to the audio data and the timing of the 3D positioning processing for the audio data is written at the third channel CH3. Such an arrangement allows the 3D positioning unit 210 to acquire the switching timing for switching the position of a virtual sound source in the three-dimensional sound field from the perspective of the user's sensation with reference to this timing information.

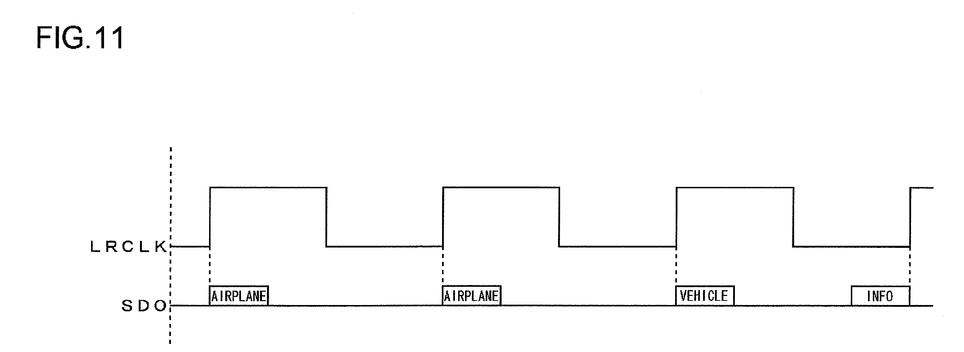

FIG. 11 is a diagram which shows an example of waveform transition of the signal LRCLK and the signal SDO according to the embodiment 3. In this example, the sound is switched from an airplane sound to a vehicle sound at a certain point in time as shown in FIG. 2. The signal SDO indicates the audio data input to the application processor 200. With the example shown in FIG. 11, the audio data for reproducing the airplane sound is input twice, following which the audio data for reproducing the vehicle sound is input once, With such an arrangement shown in FIG. 11, at the first time of transmission of the audio data for reproducing the vehicle sound, the timing information is embedded at a vacant channel in this particular audio data.

With the embodiment 3 as described above, a message for providing the synchronous operation is embedded at a vacant channel in the audio data which is to be transmitted from the sound source circuit 100 to the application processor 200. Such an arrangement provides the synchronicity between the timing of reproducing a sound according to the audio data and the 3D positioning processing for the audio data without involving any signal line for transmitting a signal created in interrupt processing, i.e., with a simple configuration.

The above-described embodiments have been described for exemplary purposes only, and are by no means intended to be interpreted restrictively. Rather, it can be readily conceived by those skilled in this art that various modifications may be made by making various combinations of the aforementioned components or processes, which are also encompassed in the technical scope of the present invention.

As shown in FIGs. 3 and 8, description has been made in the aforementioned embodiment regarding an arrangement in which the sound source LSI 110 and the application processor 200 are provided in the form of separate LSI chips. Such an arrangement has a difficulty in providing a great number of signal lines between the sound source LSI 110 and the application processor 200 without involving a large circuit scale. Accordingly, description has been made regarding an arrangement in which audio data is exchanged via a serial interface. In view of such a problem, the entire electronic circuit 300 may be provided in the form of a single chip. Such an arrangement enables a great number of signal lines to be provided between the sound source LSI 110 and the application processor 200 without involving a large circuit scale, unlike the aforementioned arrangement in which the application processor 200 is provided externally to the sound source LSI 110. Accordingly, with such an arrangement, audio data may be exchanged between the sound source LSI 110 and the application processor 200 via a parallel interface. Furthermore, a dedicated signal line may be provided for transmitting the timing information as described in the embodiment 3. Such an arrangement enables signals to be exchanged at an increased rate without involving a large circuit scale.

Description has been made in the aforementioned embodiments regarding an arrangement in which the control unit 30 provides the 3D positioning function and the virtual stereo function. The present invention is not restricted to such an arrangement. Also, an arrangement may be made in which the control unit 30 provides effect functions such as a reverberation function, a chorus function, etc. Specifically, the interrupt processing described in the embodiments 1 and 2 or the timing information embedding technique for embedding the timing information at a vacant channel described in the embodiment 3 may be applied to such effect functions. Such an arrangement provides the synchronicity between the timing of reproducing a sound according to the audio data and the processing timing of each kind of the effect functions.

### Industrial Applicability

The present invention can be applied to the field of electronic devices that perform effect processing for the audio data before reproducing the audio data.

## Claims

1. A sound reproducing method comprising:
analyzing a timing of reproducing a sound according to audio data;
adding information that indicates the sound reproducing timing to the audio data; and
performing effect processing for the audio data, according to which a sound is to be reproduced, according to the sound reproducing timing acquired with reference to the information.

2. A sound reproducing method comprising:
analyzing a change in a virtual sound source located in a sound field reproduced according to audio data;
adding the information that indicates the change in the virtual sound source to the audio data; and
adjusting the position of the virtual sound source located in the sound field reproduced according to the audio data, according to which a sound is to be reproduced, according to the change in the virtual sound source acquired with reference to the information.

3. A sound source circuit comprising:
a storage unit which stores information that indicates a sound reproducing timing and audio data; and
a control unit which reproduces a sound according to the processed audio data in cooperation with an effect processing unit which performs effect processing for the audio data stored in said storage unit,
wherein, upon detection of the information, said control unit notifies said effect processing unit that the information has been detected.

4. A sound source circuit comprising:
a storage unit which stores information that indicates a change in a virtual sound source located in a reproduced sound field and audio data; and
a control unit which reproduces a sound according to the audio data subjected to position adjustment in cooperation with a position adjustment unit which performs position adjustment processing for the audio data stored in said storage unit so as to adjust the position of the virtual sound source located in the reproduced sound field,
wherein, upon detection of the information, said control unit notifies said position adjustment unit that the information has been detected.

5. The sound source circuit according to Claim 4, wherein said control unit transmits an interrupt signal that corresponds to the information to said position adjustment unit via a dedicated signal line.

6. The sound source circuit according to Claim 4, wherein, in a case of setting a plurality of virtual sound sources in the reproduced sound field, upon detection of at least one information set that indicates a change in any one of the virtual sound sources, an interrupt signal that corresponds to the information is transmitted to said position adjustment unit via a dedicated signal line assigned to the corresponding virtual sound source.

7. The sound source circuit according to Claim 4, wherein said control unit embeds the information at vacant portion in the audio data which is to be transmitted to said position adjustment unit.

8. The sound source circuit according to any one of Claim 3 through Claim 7, wherein said sound source circuit is integrally formed on a single semiconductor substrate.

9. An electronic circuit comprising:
a sound source circuit according to Claim 3; and
an effect processing unit which performs effect processing for the audio data.

10. An electronic circuit comprising:
a sound source circuit according to any one of Claim 4 through Claim 8; and
a position adjustment unit which performs position adjust processing for the audio data so as to adjust the position of the virtual sound source located in the sound field reproduced according to the audio data.

11. An electronic device comprising:
speakers; and
an electronic circuit according to Claim 9 or Claim 10, which reproduces a sound via said speakers.
